# EUROPEAN PATENT APPLICATION

(11) **EP 4 694 490 A1**
(43) Date of publication of application: **11.02.2026**
(21) Application number: 24785153.8
(22) Date of filing: 02.04.2024
(51) Int. Cl.: H04W 72/232, H04W 72/231, H04W 72/1273, H04L 5/00

(54) **METHOD AND APPARATUS FOR INDICATING TCI STATE IN COMMUNICATION SYSTEM**

(30) Priority: 06.04.2023 KR 20230045605
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR)
(74) Representative: Isarpatent
(86) International application number: PCT/KR2024/004216
(87) International publication number: WO 2024/210447

(57) **Abstract**

Disclosed are a method and apparatus for indicating a TCI state in a communication system. The method of a UE comprises the steps of: receiving, from at least one TRP among a first TRP and a second TRP, DCI including scheduling information, a TCI field, and a TCI selection field of a PDSCH; determining at least one TCI state for receiving the PDSCH on the basis of a rule according to codepoint 11 of the TCI selection field and one or more TCI states indicated by the TCI field; and receiving the PDSCH from the at least one TRP among the first TRP and the second TRP on the basis of the at least one TCI state.

## Description

### [Technical Field]

The present disclosure relates to an enhanced communication technique, and more particularly, to a technique for indicating a transmission configuration indicator (TCI) state in a communication system.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g., 5G communication network and/or 6G communication network). The mTRPs may be geographically separated. A base station may perform communication with a terminal using the mTRPs. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRPs may perform cooperative communication based on a stable backhaul link, and the mTRPs may provide synchronized communication services to the terminal. In the NCJT scheme, the mTRPs may provide communication services to the terminal without cooperation. For example, in the NCJT scheme, the mTRPs may perform operations such as scheduling operations, precoding matrix selection operations, and modulation and coding scheme (MCS) determination operations without cooperation.

In a communication network, a base station may indicate (e.g., configure) a transmission configuration indicator (TCI) state for each TRP to the terminal. In certain situations, TCI state ambiguity may occur. In this case, the terminal may not accurately recognize a TCI state used for reception of a DL channel, and accordingly, a problem of degradation in reception performance of the DL channel may occur.

### [Disclosure]

### [Technical Problem]

The present disclosure is directed to providing a method and an apparatus for indicating a TCI state in a communication system.

### [Technical Solution]

A method of a user equipment (UE), according to exemplary embodiments of the present disclosure for achieving the above-described objective, may comprise: receiving downlink control information (DCI) from at least one TRP of a first transmission and reception point (TRP) or a second TRP, the DCI including scheduling information of a physical downlink shared channel (PDSCH), a transmission configuration indicator (TCI) field, and a TCI selection field; determining at least one TCI state for reception of the PDSCH based on one or more TCI states indicated by the TCI field and a rule of a codepoint '11' of the TCI selection field; and receiving the PDSCH from the at least one TRP of the first TRP or the second TRP based on the at least one TCI state, wherein the TCI selection field is set to a codepoint '00', a codepoint '01', a codepoint '10', or the codepoint '11', and each of the codepoint '00', the codepoint '01', the codepoint '10', or the codepoint '11' indicates a different TCI state application rule.

When the one or more TCI states indicated by the TCI field are {TCI state #n, none}, the UE may receive a first PDSCH from the first TRP based on the TCI state #n, and the UE may receive a second PDSCH from the second TRP based on a default TCI state determined by the rule of the codepoint '11', n being a natural number.

The default TCI state may be a TCI state used for reception of a previous PDSCH, a TCI state used for reception of a previous physical downlink control channel (PDCCH), a TCI state used for monitoring a control resource set (CORESET) having a lowest CORESET identifier (ID), or a TCI state in a TCI state list mapped to a lowest codepoint.

The rule of the codepoint '11' may be to change or maintain a TCI state for reception of the PDSCH in repeated PDSCH occasions.

A default TCI state may be applied in a first PDSCH occasion within a quasi-co-location (QCL) constraint time from a reception time of the DCI, and a TCI state applied in a second PDSCH occasion after the QCL constraint time may be either maintained as the default TCI state or changed to another TCI state according to the rule of the codepoint '11'.

The method may further comprise: transmitting, to the at least one TRP of the first TRP or the second TRP, UE capability information including information indicating whether the UE supports changing the TCI state for reception of the PDSCH in the repeated PDSCH occasions, and when the UE supports changing the TCI state in the repeated PDSCH occasions, the rule of the codepoint '11' may be to change the TCI state for reception of the PDSCH in the repeated PDSCH occasions.

The rule of the codepoint '11' may be to ignore the one or more TCI states indicated by the TCI field.

When indicated to ignore the one or more TCI states indicated by the TCI field, the at least one TCI state may be a TCI state used for reception of a previous downlink (DL) channel, a TCI state used for reception of the DCI, a TCI state used for monitoring a CORESET associated with the DCI, or a TCI state used for reception of a random access (RA) message in an initial access procedure.

The codepoint '11' of the TCI selection field may indicate switching between multi-TRP (mTRP) communication and single-TRP (sTRP) communication, and after reception of the PDSCH, the mTRP communication may be switched to the sTRP communication or the sTRP communication may be switched to the mTRP communication based on the codepoint '11'.

The codepoint '11' of the TCI selection field may indicate a priority between a beam application time and a QCL constraint time, and when the beam application time has a higher priority, the one or more TCI states indicated by the TCI field may be applied after the beam application time, and when the QCL constraint time has a higher priority, the one or more TCI states indicated by the TCI field may be applied after the QCL constraint time.

A user equipment (UE), according to exemplary embodiments of the present disclosure for achieving the above-described objective, may comprise at least one processor, wherein the at least one processor may cause the UE to perform: receiving downlink control information (DCI) from at least one TRP of a first transmission and reception point (TRP) or a second TRP, the DCI including scheduling information of a physical downlink shared channel (PDSCH), a transmission configuration indicator (TCI) field, and a TCI selection field; determining at least one TCI state for reception of the PDSCH based on one or more TCI states indicated by the TCI field and a rule of a codepoint '11' of the TCI selection field; and receiving the PDSCH from the at least one TRP of the first TRP or the second TRP based on the at least one TCI state, wherein the TCI selection field is set to a codepoint '00', a codepoint '01', a codepoint '10', or the codepoint '11', and each of the codepoint '00', the codepoint '01', the codepoint '10', or the codepoint '11' indicates a different TCI state application rule.

When the one or more TCI states indicated by the TCI field are {TCI state #n, none}, the UE may receive a first PDSCH from the first TRP based on the TCI state #n, and the UE may receive a second PDSCH from the second TRP based on a default TCI state determined by the rule of the codepoint '11', n being a natural number.

The default TCI state may be a TCI state used for reception of a previous PDSCH, a TCI state used for reception of a previous physical downlink control channel (PDCCH), a TCI state used for monitoring a control resource set (CORESET) having a lowest CORESET identifier (ID), or a TCI state in a TCI state list mapped to a lowest codepoint.

The rule of the codepoint '11' may be to change or maintain a TCI state for reception of the PDSCH in repeated PDSCH occasions.

A default TCI state may be applied in a first PDSCH occasion within a quasi-co-location (QCL) constraint time from a reception time of the DCI, and a TCI state applied in a second PDSCH occasion after the QCL constraint time may be either maintained as the default TCI state or changed to another TCI state according to the rule of the codepoint '11'.

The at least one processor may further cause the UE to perform: transmitting, to the at least one TRP of the first TRP or the second TRP, UE capability information including information indicating whether the UE supports changing the TCI state for reception of the PDSCH in the repeated PDSCH occasions, and when the UE supports changing the TCI state in the repeated PDSCH occasions, the rule of the codepoint '11' may be to change the TCI state for reception of the PDSCH in the repeated PDSCH occasions.

The rule of the codepoint '11' may be to ignore the one or more TCI states indicated by the TCI field.

When indicated to ignore the one or more TCI states indicated by the TCI field, the at least one TCI state may be a TCI state used for reception of a previous downlink (DL) channel, a TCI state used for reception of the DCI, a TCI state used for monitoring a CORESET associated with the DCI, or a TCI state used for reception of a random access (RA) message in an initial access procedure.

The codepoint '11' of the TCI selection field may indicate switching between multi-TRP (mTRP) communication and single-TRP (sTRP) communication, and after reception of the PDSCH, the mTRP communication may be switched to the sTRP communication or the sTRP communication may be switched to the mTRP communication based on the codepoint '11'.

The codepoint '11' of the TCI selection field may indicate a priority between a beam application time and a QCL constraint time, and when the beam application time has a higher priority, the one or more TCI states indicated by the TCI field may be applied after the beam application time, and when the QCL constraint time has a higher priority, the one or more TCI states indicated by the TCI field may be applied after the QCL constraint time.

### [Advantageous Effects]

According to the present disclosure, downlink control information (DCI) for scheduling a physical downlink shared channel (PDSCH) can indicate not only an application of a unified TCI state after a beam application time (BAT) but also a TCI state for a scheduled PDSCH. A base station can dynamically indicate to the terminal the TCI state for the PDSCH in consideration of a channel condition between the base station and the terminal and/or a use scenario. According to the method, ambiguity regarding the TCI state in the terminal can be resolved, and the terminal can perform a reception operation based on the TCI state.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a timefrequency resource in a communication system.
FIG. 9 is a conceptual diagram illustrating a method for indicating a unified TCI state.
FIG. 10 is a conceptual diagram illustrating exemplary embodiments of a method of applying a TCI state in repeated PDSCH transmission.
FIG. 11A and FIG. 11B are conceptual diagrams illustrating exemplary embodiments of a method for configuring a TCI state according to a codepoint of a TCI selection field.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

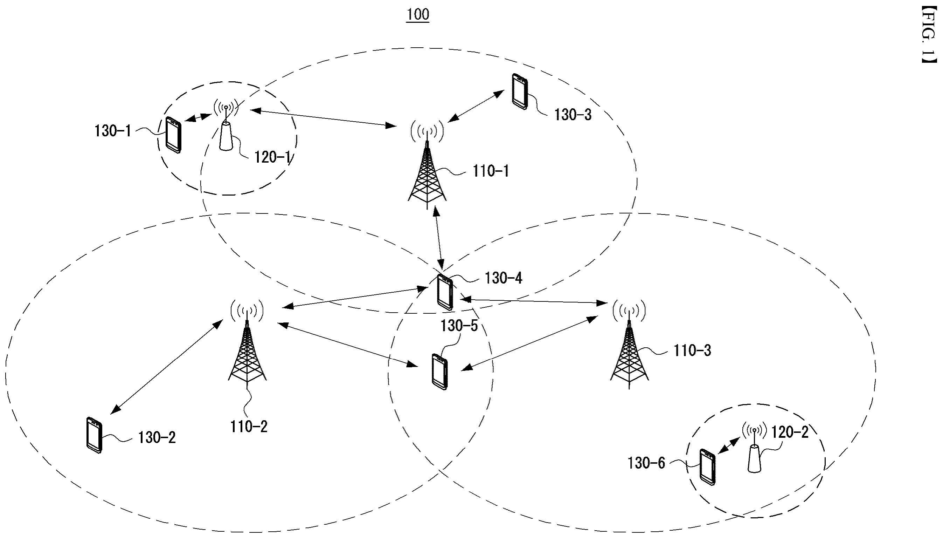

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

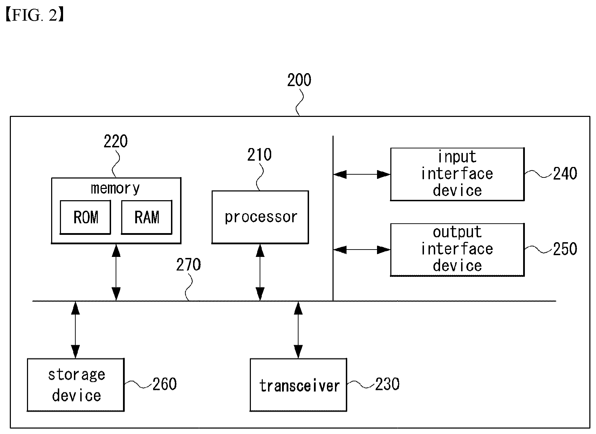

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliabilitybase station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

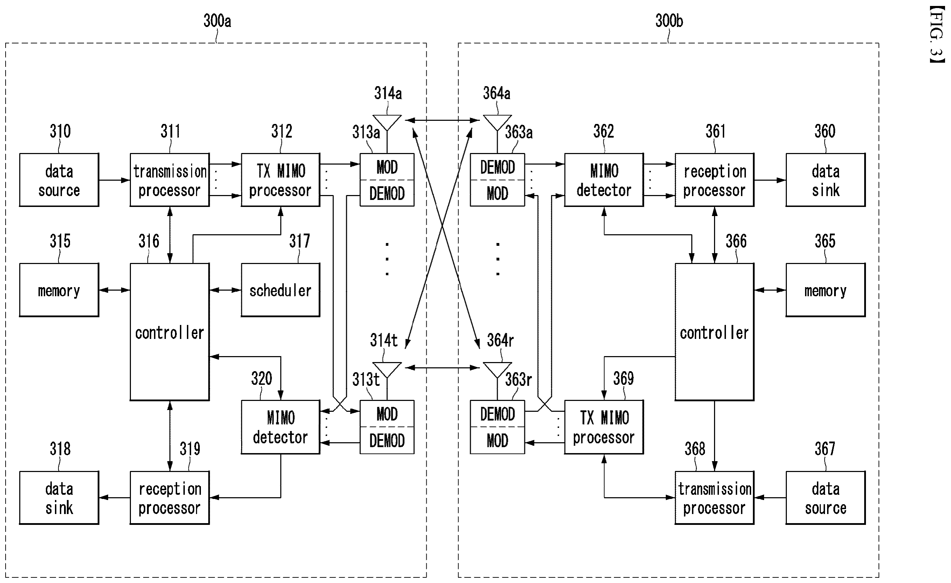

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

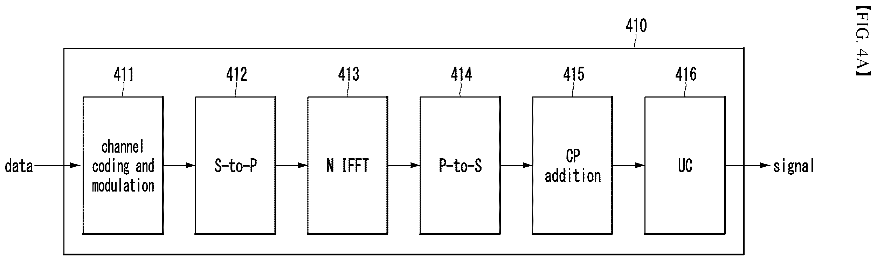

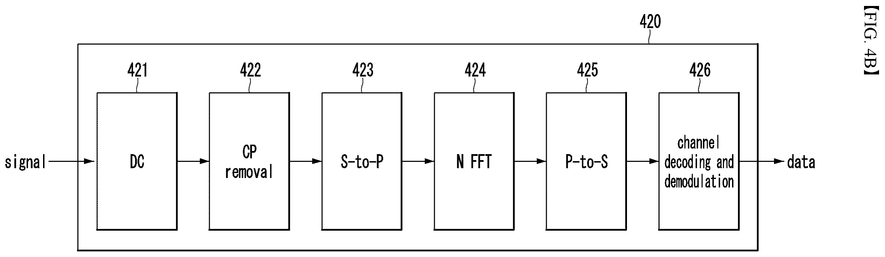

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may upconvert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

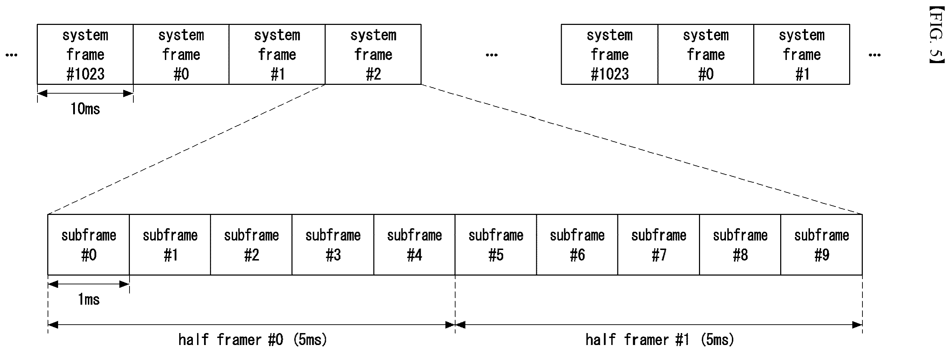

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

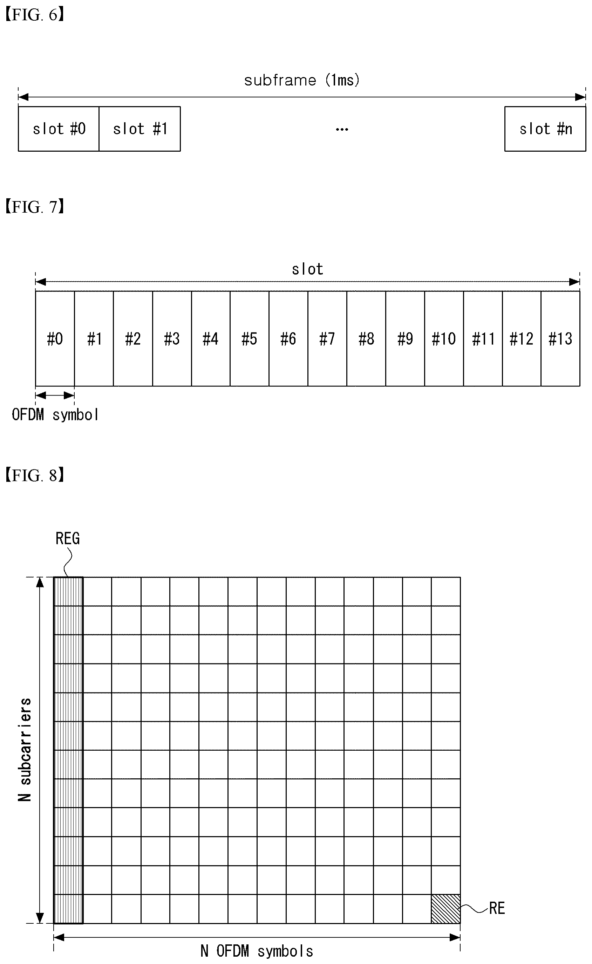

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a timefrequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g., communication network) may support a transmission and reception point (TRP) technology (e.g., multi-TRP (mTRP) technology and/or single TRP (sTRP) technology). The communication system supporting the TRP technology may be referred to as a TRP system (e.g., mTRP system and/or sTRP system). In the present disclosure, 'TRP' may has a meaning including 'sTRP' and/or 'mTRP', and 'TRP' may refer to 'sTRP' or 'mTRP' depending on a context. A TRP may refer to an antenna set, an antenna group, and/or an antenna array. A TRP may be associated with a CORESET and/or a beam (e.g., beam group).

The mTRP technology may fall under a category of MIMO technology. The mTRP may have characteristics (e.g., cell level characteristics) of macro cells, small cells, pico cells, and/or femto cells. The mTRP may perform data transmission for a terminal. In a case where a channel (e.g., link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single SCI scheme, a terminal may expect to receive PDSCHs transmitted by different TRPs through different layers while using the same time and frequency resource. Alternatively, the terminal may expect to receive PDSCHs transmitted by different TRPs through different time resources (e.g., different time regions) while using the same frequency resource and the same layer. Alternatively, the terminal may expect to receive PDSCHs transmitted by different TRPs through different frequency resources (e.g., different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g., a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g., configure) a common beam regardless of DL communication and UL communication. Alternatively, a unified TCI state may indicate (e.g., configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states of a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g., encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces (e.g., search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g., configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g., TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

In a communication system, DCI formats 1_0, 1_1, and/or 1_2 may be used for PDSCH scheduling. Depending on a usage purpose, a different DCI format may be used. DCI format 1_0 may correspond to a fallback DCI. The size of DCI format 1_0 may be small, and DCI format 1_0 may support limited functionality. DCI format 1_0 may be used in a state where information exchange between a terminal and a base station is incomplete, such as an initial attachment procedure and/or an RRC reconfiguration procedure. Since accurate beam configuration between the terminal and the base station may not be possible or required, DCI format 1_0 may not include a field for unified TCI state configuration.

DCI formats 1_1 and 1_2 may correspond to non-fallback DCIs. DCI formats 1_1 and 1_2 may be used for reliability. DCI formats 1_1 and 1_2 may include not only PDSCH resource configuration information but also configuration information (e.g., TCI configuration or TCI field) for a beam (e.g., reception beam) of a terminal. Regarding DCI formats 1_1 and 1_2 that schedule a PDSCH, a unified DCI framework may be extended for mTRP. A field (e.g., TCI field or TCI selection field) within the DCI may be used to indicate a codepoint mapped to TCI state lists indicated (e.g., configured) through a MAC CE. The size of the TCI field within the DCI may be 3 bits. An additional field for beam configuration for PDSCH reception may be included in the DCI, and the size of the additional field may be 2 bits. The additional field may be referred to as a TCI selection field.

The additional field (e.g., additional bits) may be allocated for the following reasons. In sTRP communication, switching between sTRP communication and mTRP communication may not occur. Regarding beam selection for sTRP communication, the terminal may transmit and receive data using a beam (e.g., updated beam) configured based on TCI state(s) mapped to a codepoint indicated (e.g., configured) by a DCI (e.g., TCI field included in the DCI). The TCI state(s) may be applied after a beam application time (BAT). The BAT may refer to a time required for beam application. In the present disclosure, a beam may refer to a transmission beam and/or a reception beam. In mTRP communication, switching between sTRP communication and mTRP communication may be required. TCI state(s) indicated (e.g., configured) by a DCI may be applied to all channels. Unlike the above-described scheme, a scheme for dynamically controlling TCI state(s) may be required. The TCI state may be applied in a channel-specific manner. For this reason, the additional field (e.g., 2 bits) may be allocated to the DCI.

For a PDSCH (e.g., PDSCH scheduled by a DCI) satisfying a specific time duration (e.g., threshold) from a PDCCH (e.g., PDCCH resource in which the DCI is received), the terminal may expect to configure a reception beam of the PDSCH using a TCI state indicated by the DCI. The specific time duration (e.g., threshold) may be *timeDurationForQCL.* In a case where the PDSCH does not satisfy the specific time duration (e.g., threshold), or in a case where the PDSCH satisfies the specific time duration (e.g., threshold) but the TCI state is not indicated (e.g., configured), the terminal may configure the reception beam of the PDSCH to be the same as a reception beam of the PDCCH and may expect to receive the PDSCH using the configured reception beam. The case where the PDSCH satisfies the specific time duration may refer to a case where the PDSCH is received after the specific time duration. The case where the PDSCH does not satisfy the specific time duration may refer to a case where the PDSCH is received within the specific time duration.

In a case where such beam configuration duration is not guaranteed (e.g., the specific time duration has not ended) or in a case where the TCI state is not indicated (e.g., configured), the terminal may expect to receive the PDSCH using a default beam. The default beam may be the reception beam of the PDCCH. In the extension of the unified TCI state framework for mTRP communication, operations of the base station and/or the terminal according to the specific time duration (e.g., threshold) may be required.

Regarding the extension of the unified TCI state framework for mTRP communication, the DCI may include 3 bits as well as additional bits (e.g., 2 bits) for configuring a TCI state for sTRP communication. The additional bits may be bits for mTRP communication.

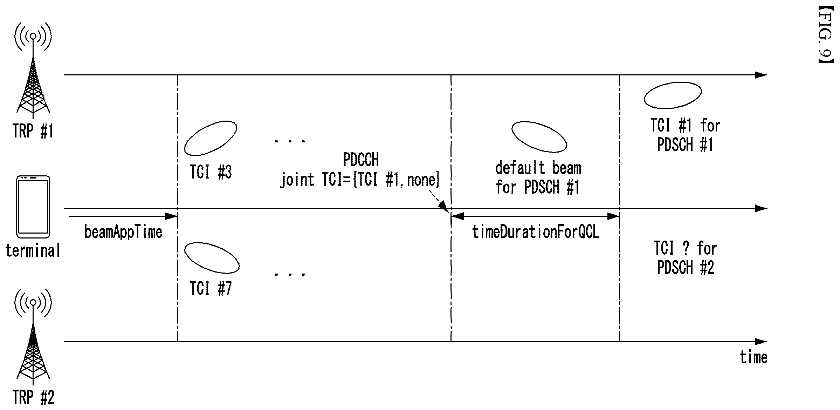

FIG. 9 is a conceptual diagram illustrating a method for indicating a unified TCI state.

As shown in FIG. 9, a terminal may perform communication with two TRPs (e.g., TRP #1 and TRP #2). Before a TCI state is indicated by a DCI, the terminal may receive DL channels of TRP #1 and TRP #2 based on a DL TCI state or a joint TCI state. The terminal may receive the DL channel of TRP #1 using a reception beam based on a QCL configuration or a TCI state configuration of TCI #3. The terminal may receive the DL channel of TRP #2 using a reception beam based on a QCL configuration or a TCI state configuration of TCI #7. Thereafter, the base station may transmit a DCI including a field (e.g., TCI field) indicating a codepoint corresponding to {TCI #1, none}. The DCI may be transmitted to the terminal via at least one of TRP #1 or TRP #2 connected to a base station. The terminal may receive the DCI from the base station and may identify the information (e.g., the field) included in the DCI. The terminal may identify the field indicating the codepoint corresponding to {TCI #1, none} indicated by the DCI.

In this case, the terminal may not expect to receive a PDSCH from TRP #2. In other words, in a case where the DCI indicates {TCI #1, none}, ambiguity may occur for a TCI state for TRP #2, and the terminal may not expect to receive a PDSCH from TRP #2. Alternatively, the terminal may expect to receive a PDSCH from TRP #2 using TCI #7 used for a previous PDSCH reception. To resolve the above-described ambiguity, the DCI may include an additional field (e.g., TCI selection field). The size of the TCI selection field may be 2 bits. The TCI selection field may be introduced for switching between mTRP communication and sTRP communication.

The TCI selection field having a size of 2 bits may indicate four codepoints (00, 01, 10, 11). Among the four codepoints, three codepoints may be defined as shown in Table 2 below.

**[Table 2]**

| Codepoint | TCI selection |
|---|---|
| 00 | The terminal may apply the first one among two indicated joint/DL TCI states to all PDSCH DMRS ports of the corresponding PDSCH transmission occasion(s) scheduled/activated through DCI format 1_1/1_2. |
| 01 | The terminal may apply the second one among two indicated joint/DL TCI states to all PDSCH DMRS ports of the PDSCH transmission occasion(s) scheduled/activated through DCI format 1_1/1_2. |
| 10 | The terminal may apply all indicated joint/DL TCI states to reception of the PDSCH scheduled/activated through DCI format 1_1/1_2. |

A definition for the remaining codepoint (e.g., 11) of the TCI selection field may be required, and a definition of operations of the terminal and/or the base station according to the remaining codepoint (e.g., 11) of the TCI selection field may be required. The exemplary embodiments of the present disclosure may be applied not only to DCI formats 1_1 and 1_2 but also to all DCI formats. For example, the exemplary embodiments of the present disclosure may be applied to all DCI formats usable for TCI state configuration.

### [Method #1: The codepoint '11' of the TCI selection field may indicate a default beam for a 'none' value of a TCI state]

In the exemplary embodiment of FIG. 9, the case in which a TCI state for TRP #2 is not indicated, such as {TCI #1, none}, may not be supported by the codepoint '10' of the TCI selection field. When a list of TCI states including a TCI state set to 'none' is indicated (e.g., configured) by the TCI field, a definition for an operation of the terminal for the TRP corresponding to the TCI state set to 'none' may be required. In other words, in order to perform a reception operation for the TRP corresponding to the TCI state set to 'none', a definition for which beam (e.g., which TCI state) the terminal uses may be required. The beam may be a beam of a CORESET associated with a previous PDCCH reception or a beam used for PDSCH reception in an initial access phase.

In a case where the default beam configuration is not applied, the codepoint '11' of the TCI selection field may indicate a configuration of the TCI state. For example, the base station may indicate (e.g., configure) {TCI #1, none} for {TRP #1, TRP #2} to the terminal using the TCI field (e.g., TCI field having a size of 3 bits) included in the DCI. In this situation, when the TCI selection field included in the DCI indicates the codepoint '10', the terminal may expect to receive a PDSCH #1 from TRP #1 using TCI #1, and may expect to receive a PDSCH #2 from TRP #2 using a beam (e.g., reception beam) of a CORESET associated with a previous DCI (e.g., previous PDCCH). The operation may be performed in a case where the TCI state is indicated as 'none' (e.g., none-state) and the terminal's beam configuration is agreed to be the same as the beam (e.g., reception beam) of the CORESET. The PDSCH #1 and PDSCH #2 may be the same PDSCH or different PDSCHs.

As another example, the base station may indicate (e.g., configure) {TCI #1, none} for {TRP #1, TRP #2} to the terminal using the TCI field (e.g., TCI field having a size of 3 bits) included in the DCI. In this situation, when the TCI selection field included in the DCI indicates the codepoint '11', the terminal may expect to receive a PDSCH #1 from TRP #1 using TCI #1 (e.g., unified TCI #1), and may expect to receive a PDSCH #2 from TRP #2 using a candidate default beam (e.g., default beam or default TCI state). The candidate default beam (e.g., default beam, default TCI) may be a reception beam for a PDSCH in an initial access procedure or a reception beam of a previous PDSCH. In other words, the candidate default beam (e.g., default beam, default reception beam, default TCI state) may be a reception beam for receiving an RA message (e.g., Msg2, Msg4, MsgB) in the initial access procedure. The reception beam may have a meaning corresponding to a TCI state. The default beam may refer to a default TCI state.

A TCI state order and/or mapping for the codepoint '11' of the TCI selection field may be the same as TCI state orders and/or mappings for other codepoints (e.g., codepoint 00, 01, and/or 10) of the TCI selection field. The codepoint '11' of the TCI selection field may mean applying a TCI state (e.g., reception beam having a different TCI state) different from a predefined method (e.g., common method) in a case where a TCI state is indicated as 'none' (e.g., none-state).

For example, the TCI field included in the DCI may indicate {none, TCI #3} for {TRP #1, TRP #2} (e.g., a codepoint #7 (e.g., codepoint '110') mapped to a TCI state list {none, TCI #3} for {TRP #1, TRP #2}), and the TCI selection field included in the DCI may indicate a codepoint '00'. In this situation, reception beams for the PDSCHs transmitted by the two TRPs may all follow 'none'. The terminal may configure (e.g., determine, select) a reception beam for 'none' based on a predefined rule (e.g., configuration). For example, the terminal may select a reception beam for 'none' from among (1) a beam (e.g., reception beam, TCI state) used for receiving a PDSCH (e.g., previous PDSCH) of each TRP, (2) a beam (e.g., reception beam, TCI state) used for receiving a PDCCH (e.g., previous PDCCH) of each TRP, (3) a reception beam (e.g., TCI state) for monitoring a CORESET having the lowest CORESET identifier (ID), or (4) a TCI state (e.g., reception beam for the TCI state) of a TCI state list mapped to the lowest codepoint. The method of selecting a reception beam based on (1), (2), (3), or (4) may be a basic method (e.g., configuration method) of selecting a reception beam of the terminal.

When the TCI selection field is set to the codepoint '11', the terminal may select (e.g., configure) a reception beam for a none-state (e.g., 'none' value, 'none') based on a different rule. When the TCI selection field is set to the codepoint '00', '01', or '10' and the TCI state is none-state (e.g., none-value, 'none'), the terminal may select (e.g., configure) a reception beam based on one of (1) to (4). When the TCI selection field is set to the codepoint '11' and the TCI state is a 'none'-state (e.g., 'none' value, 'none'), the terminal may select (e.g., configure) a reception beam based on one of the scheme except the selected scheme among (1) to (4).

### [Method #2: The codepoint '11' of the TCI selection field may be used as an on/off switch indicator for repeated PDSCHs]

In the NCJT scheme, PDSCH scheduling for mTRP may be performed through a single DCI. In this case, for reliability improvement and/or interference avoidance of PDSCH transmission, repeated PDSCH transmission may be supported. The respective TRPs may repeatedly transmit PDSCHs in different resources. The different resources may be different resources in the time domain (e.g., time resources according to *tdmSchemeA* or inter-slot TDM) and/or different resources in the frequency domain (e.g., frequency resources according to *fdmSchemeA* or *fdmSchemeB*)*.*

The codepoint '11' of the TCI selection field may be used as an indicator indicating whether to maintain or change a reception beam (e.g., TCI state) for repeated PDSCH occasions (e.g., repeated PDSCH resources). A QCL constraint time (e.g., threshold, *timeDurationForQCL*) for applying QCL between a PDCCH and a PDSCH may be defined. Based on the QCL constraint time, whether to apply the TCI state indicated by the DCI and/or a configuration method of a default reception beam of the terminal may vary. The default reception beam may be applied to a PDSCH received within the QCL constraint time from a time when the PDCCH is received. The default reception beam may refer to a default TCI state. The default reception beam may not be applied to a PDSCH received after the QCL constraint time from the time when the PDCCH is received. The QCL constraint time may include a time required for processing delay and beam sweeping (e.g., beam switching, beam change) in a PDCCH reception procedure. The QCL constraint time may be determined based on a capability of the terminal. The base station may inform the terminal of information on the QCL constraint time through signaling. The signaling may include at least one of SI signaling, RRC signaling, MAC signaling, or PHY signaling.

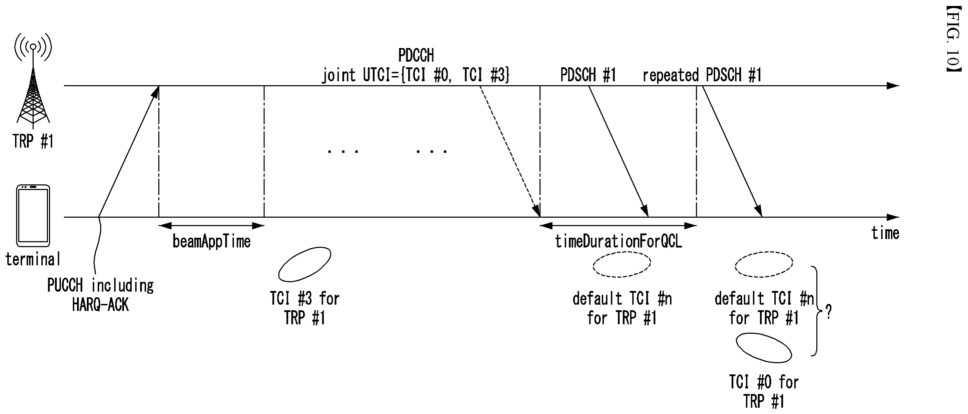

FIG. 10 is a conceptual diagram illustrating exemplary embodiments of a method of applying a TCI state in repeated PDSCH transmission.

As shown in FIG. 10, PDSCH occasions may be multiplexed in the time domain. TRP #1 may repeatedly transmit a PDSCH (e.g., PDSCH #1) in the PDSCH occasions. In a case where all PDSCH occasions exist within a QCL constraint time from a PDCCH (e.g., a reception time of the PDCCH), the terminal may expect to receive the PDSCH in all PDSCH occasions using a default reception beam (e.g., default TCI). In a case where repeated PDSCH transmission is scheduled by a DCI, some PDSCH occasions exist within the QCL constraint time from the reception time of the DCI, and remaining PDSCH occasions exist after the QCL constraint time from the reception time of the DCI, the terminal may expect to receive the PDSCH in some PDSCH occasions within the QCL constraint time using a default reception beam (e.g., default TCI), and may expect to receive the PDSCH in some PDSCH occasions after the QCL constraint time using a reception beam according to a predefined rule (e.g., the default reception beam or a reception beam according to a TCI state indicated by the DCI). In other words, the TCI state indicated by the DCI may be applied to PDSCH reception in PDSCH occasion(s) that exist after the QCL constraint time from the reception time of the DCI.

The base station may expect PDSCH transmission using a default reception beam (e.g., a default TCI) within the QCL constraint time. Among a plurality of PDSCH occasions, some PDSCH occasions may exist after the QCL constraint time. In some PDSCH occasions that exist after the QCL constraint time, the terminal may expect to receive the PDSCH using the default reception beam instead of using the TCI state indicated by the DCI. Alternatively, in some PDSCH occasions that exist after the QCL constraint time, the terminal may expect to receive the PDSCH using the TCI state indicated by the DCI.

A performance degradation may occur due to the above operation, and the performance degradation may be avoided by using the TCI selection field included in the DCI. The codepoint '11' of the TCI selection field may indicate whether beam sweeping (or beam switching, beam change, TCI change) is allowed based on the QCL constraint time (e.g., threshold, *timeDurationForQCL*)*.* When the TCI selection field is set to the codepoint '00', '01', or '10', the terminal may expect to receive the PDSCH using a fixed reception beam (e.g., fixed TCI state) regardless of the QCL constraint time. When the TCI selection field is set to the codepoint '11', the terminal may expect to receive the PDSCH using a reception beam based on the TCI state indicated by the DCI or the default reception beam after the QCL constraint time from the reception time of the DCI. The base station may expect to transmit the PDSCH using a transmission beam based on the TCI state indicated by the DCI or a default transmission beam after the QCL constraint time from a transmission time of the DCI.

Application of a TCI state for each TRP to the PDSCH may be based on a rule according to the codepoint '00', '01', '10', or '11' of the TCI selection field. The codepoint '11' of the TCI selection field may follow one of the rules of codepoint '00', '01', or '10' of the TCI selection field. For example, the codepoint '11' of the TCI selection field may follow the rule of codepoint '00' of the TCI selection field. In this case, the terminal may receive PDSCHs from two TRPs based on the first TCI state among the two TCI states indicated. The terminal may receive the PDSCH using the default reception beam or the reception beam according to the TCI state (e.g., TCI state indicated by the DCI) within the QCL constraint time, and the terminal may receive the PDSCH using the reception beam based on the TCI state indicated by the DCI (or default reception beam) after the QCL constraint time.

The codepoint '11' of the TCI selection field may follow one of the rules of codepoint '00', '01', or '10' of the TCI selection field, and the codepoint '11' of the TCI selection field may indicate that beam sweeping (e.g., beam switching, beam change, TCI change) is allowed after the QCL constraint time. Alternatively, the codepoint '00', '01', and/or '10' of the TCI selection field may indicate that beam sweeping is allowed after the QCL constraint time, and the codepoint '11' of the TCI selection field may indicate that beam sweeping is not allowed after the QCL constraint time.

The terminal may generate a UE capability report including information indicating whether beam sweeping (e.g., change of TCI state) is supported in repeated PDSCH transmission (e.g., repeated PDSCH occasions), and may transmit the UE capability report to the base station. The UE capability report may be transmitted to the base station via a TRP(s). The base station may receive the UE capability report from the terminal and may identify information (e.g., information elements) included in the UE capability report. Based on whether the terminal supports beam sweeping in repeated PDSCH transmission, the base station may allow or disallow beam sweeping after the QCL constraint time by using the codepoint '11' of the TCI selection field. When the terminal supports beam sweeping in repeated PDSCH transmission, a rule according to the codepoint '11' of the TCI selection field transmitted by the base station may be to allow beam sweeping after the QCL constraint time. When the terminal does not support beam sweeping in repeated PDSCH transmission, a rule according to the codepoint '11' of the TCI selection field transmitted by the base station may be to disallow beam sweeping after the QCL constraint time.

The exemplary embodiment may be similarly applied to a BAT (*beamAppTime*)*.* The terminal may apply a TCI state indicated by a DCI after a BAT. A DL channel (e.g., PDSCH) may exist within the BAT, and a UL channel (e.g., PUSCH) may exist after the BAT. Alternatively, a UL channel (e.g., PUSCH) may exist within the BAT, and a DL channel (e.g., PDSCH) may exist after the BAT. In this case, the codepoint '11' of the TCI selection field may indicate whether beam sweeping (e.g., beam switching, beam change, TCI state change) is allowed after the BAT.

### [Method #3: The codepoint '11' of the TCI selection field may be used as an indicator indicating whether to ignore a TCI state indicated (e.g., configured) by a DCI (e.g., DCI for PDSCH scheduling)]

In Method #1 and/or Method #2, a reception beam of a PDSCH may be configured based on TCI state(s) indicated by a DCI scheduling the PDSCH. The DCI may include scheduling information of the PDSCH, the TCI field, and/or the TCI selection field. In addition, the DCI may further include other fields (e.g., other information elements). The base station and/or the terminal may expect to apply TCI state(s) indicated by the DCI after a time required for beam alignment (e.g., BAT). For dynamic beam configuration of a PDSCH existing within the BAT, the TCI selection field (e.g., TCI selection field having a size of 2 bits) may be used.

Since the TCI field has a size of 3 bits, use of the TCI selection field having a size of 2 bits for configuring a reception beam of the PDSCH may affect PDSCH reception performance. When the TCI selection field having a size of 2 bits is used for configuring a reception beam of the PDSCH, overhead of the terminal may increase.

The reception beam of the PDSCH may be configured based on a reception beam of a previous PDSCH or a previous DL channel, not the TCI selection field included in the DCI scheduling the PDSCH. The codepoint '11' of the TCI selection field may indicate a case where the reception beam of the PDSCH is configured not by the TCI selection field included in the DCI scheduling the PDSCH but by a reception beam of a previous PDSCH or a previous DL channel.

The DCI may include the TCI field and the TCI selection field, and the codepoints '00', '01', and/or '10' of the TCI selection field may be associated with TCI state(s) (e.g., application rule of the TCI state(s)) according to the TCI field. The codepoint '11' of the TCI selection field may indicate to ignore the TCI field (e.g., the TCI field included in the same DCI as the TCI selection field).

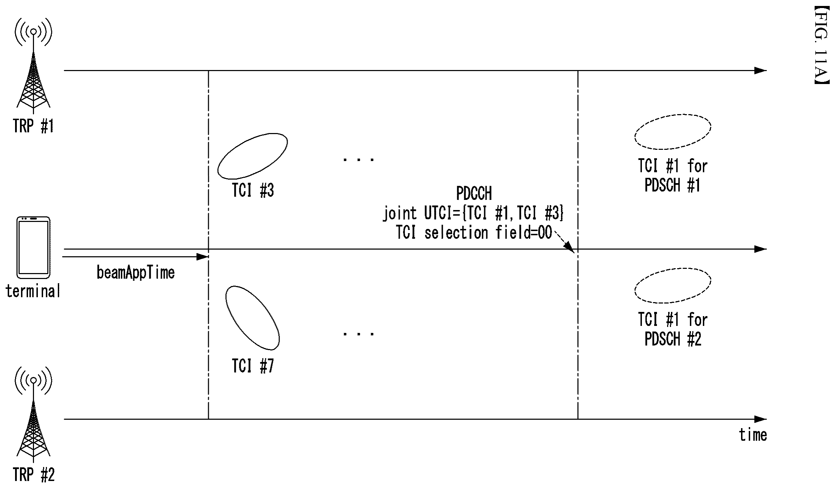

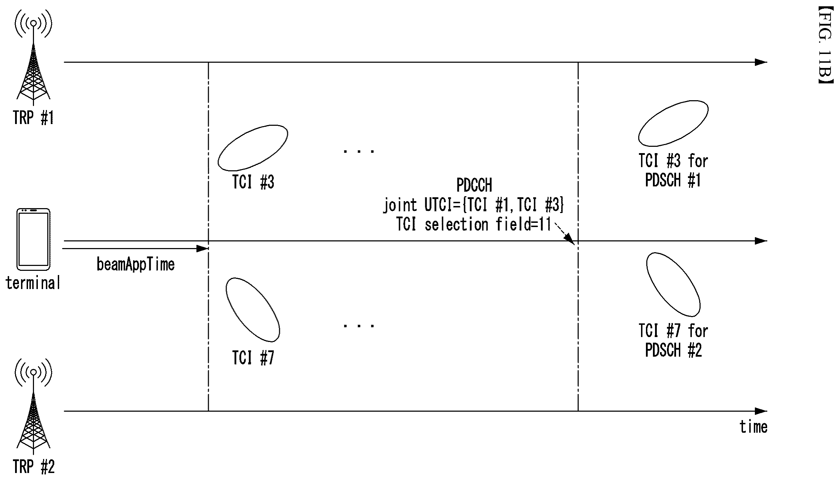

FIG. 11A and FIG. 11B are conceptual diagrams illustrating exemplary embodiments of a method for configuring a TCI state according to a codepoint of a TCI selection field.

As shown in FIG. 11A and FIG. 11B, a base station may transmit a DCI including a TCI field and a TCI selection field. The DCI may further include scheduling information of a PDSCH. The DCI of the base station may be transmitted to the terminal via TRP #1 and/or TRP #2. The TCI field may indicate (e.g., configure) {TCI state #1, TCI state #3} to the terminal. In the exemplary embodiment of FIG. 11A, a codepoint of the TCI selection field may be '00'. In the exemplary embodiment of FIG. 11B, a codepoint of the TCI selection field may be '11'.

In the exemplary embodiment of FIG. 11A, since the TCI selection field is set to codepoint '00', the terminal may receive PDSCHs from all TRPs (e.g., TRP #1 and TRP #2) based on the first TCI state (e.g., TCI state #1) among {TCI state #1, TCI state #3} indicated by the TCI field. In the exemplary embodiment of FIG. 11B, since the TCI selection field is set to codepoint '11', the terminal may ignore {TCI state #1, TCI state #3} indicated by the TCI field, and may expect to receive the PDSCH based on a TCI state used for receiving a previous PDSCH and/or a previous DL channel. For example, the terminal may receive a PDSCH #1 of TRP #1 based on TCI state #3, and may receive a PDSCH #2 of TRP #2 based on TCI state #7.

In the exemplary embodiment of FIG. 11B, the terminal may receive a PDSCH scheduled by the DCI using a beam configuration for receiving a DL channel of each TRP before the reception of the DCI (e.g., PDCCH), a beam configuration for receiving the DCI, or a beam configuration for monitoring a CORESET associated with the DCI. A reception beam used for receiving the PDSCH may be a reception beam used for receiving Msg2, Msg4, or MsgB in an initial access procedure (e.g., random access procedure).

When the DCI includes the TCI field and the TCI selection field, and the TCI selection field is set to codepoint '11', the terminal may ignore the TCI field included in the DCI. In other words, regardless of the TCI field, the terminal may receive the PDSCH using a reception beam (e.g., TCI state) used for receiving a previous DL channel, a reception beam (e.g., TCI state) used for receiving the DCI, a reception beam (e.g., TCI state) used for monitoring a CORESET associated with the DCI, or a reception beam (e.g., TCI state) used for receiving a message (e.g., Msg2, Msg4, MsgB) in an initial access procedure.

### [Method #4: The codepoint '11' of the TCI selection field may be used as an indicator for switching between mTRP communication and sTRP communication]

A DCI may include PDSCH scheduling information, the TCI field, and/or the TCI selection field. A codepoint '11' of the TCI selection field may indicate switching from mTRP communication to sTRP communication or from sTRP communication to mTRP communication for other DL communication and/or other UL communication after a PDSCH transmission scheduled by the DCI.

A TCI state list mapped to a codepoint of the TCI field may indicate a single TCI state. In this case, according to the codepoint '11' of the TCI selection field, a transmission and reception operation with a TRP associated with a TCI state not configured may not be expected. Alternatively, according to the codepoint '11' of the TCI selection field, a transmission and reception operation with a TRP associated with a configured TCI state may be expected. The terminal may expect to receive PDSCH(s) based on a TCI state according to the rule of codepoint '00', '01', or '10' of the TCI selection field included in the DCI. After receiving the PDSCH scheduled by the DCI, the terminal may expect switching from mTRP communication to sTRP communication or from sTRP communication to mTRP communication.

A switching condition may be a difference between an activated TCI state list and a TCI state list indicated by the current DCI. In a case where a unified TCI state in a joint type is assumed to be configured, the TCI field is set to '011', the TCI state list indicated by the DCI scheduling the PDSCH is {TCI #1, none}, and the activated TCI state list before the DCI is {TCI #3, TCI #4}, the terminal may expect to receive a plurality of PDSCHs and may expect switching from mTRP communication to sTRP communication after receiving the plurality of PDSCHs. Conversely to the above exemplary embodiment, the terminal may expect switching from sTRP communication to mTRP communication.

### [Method #5: The codepoint '11' of the TCI selection field may indicate a priority between BAT and QCL constraint time (timeDurationForQCL), or may indicate whether to follow the BAT or the QCL constraint time]

A BAT and a QCL constraint time (*timeDurationForQCL*) may have the following relationships. The BAT may be a value commonly applied to not only a PDSCH but also other physical channels. *timeDurationForQCL* may be a PDSCH-specific constraint time. A reception beam (e.g., beam configuration, TCI state) for a PDSCH associated with a TCI selection field may or may not be applied depending on *timeDurationForQCL.* A PDSCH scheduled by a DCI may be allocated before or after the BAT. When a priority of the QCL constraint time is higher than a priority of the BAT, the QCL constraint time may be applied. In this case, TCI state(s) indicated by the TCI field may be applied after the QCL constraint time. When a priority of the BAT is higher than a priority of the QCL constraint time, the BAT may be applied. In this case, the TCI state(s) indicated by the TCI field may be applied after the BAT.

When the codepoint '00', '01', or '10' of the TCI selection field satisfies *timeDurationForQCL* regardless of the BAT, application of the TCI state(s) configured (e.g., indicated) by the DCI may be assumed. The codepoint '11' of the TCI selection field may indicate application of the TCI state(s) configured (e.g., indicated) by the DCI in a case where both the BAT and *timeDurationForQCL* are satisfied. A relationship of TCI state(s) for a plurality of PDSCHs scheduled by the DCI may follow the rule according to codepoint '00', '01', or '10' of the TCI selection field. Satisfying *timeDurationForQCL* may mean that *timeDurationForQCL* has ended. Satisfaction of *timeDurationForQCL* by a codepoint of the TCI selection field may mean that the codepoint of the TCI selection field is applied after the end of *timeDurationForQCL.* Satisfaction of the BAT may mean that the BAT has ended. Satisfaction of the BAT by a codepoint of the TCI selection field may mean that the codepoint of the TCI selection field is applied after the end of the BAT.

When the codepoint '00', '01', or '10' of the TCI selection field satisfies a minimum of the BAT and *timeDurationForQCL,* the PDSCHs may be configured. When application of a TCI state configuration configured (e.g., indicated) by the DCI for the PDSCHs is allowed, the codepoint '11' of the TCI selection field may indicate application of a TCI state to PDSCH resources existing after a larger value between the BAT and *timeDurationForQCL,* e.g., after a resource indicated by the PDCCH.

The exemplary embodiments of the present disclosure may be applied to a PDCCH (e.g., DCI) including PUSCH scheduling information. In other words, the exemplary embodiments of the present disclosure may be applied to field usage of a DCI format including PUSCH scheduling information and/or configuration of a transmission beam (e.g., spatial filter, TCI state) of a PUSCH. In the exemplary embodiments of the present disclosure, the DCI may be interpreted as UCI.

The exemplary embodiments of the present disclosure may be applied according to an interval between a PDCCH scheduling a PDSCH and the PDSCH scheduled by the PDCCH. In the exemplary embodiments of the present disclosure, function(s) may be applied to a beam application time (e.g., BAT) required for beam alignment between the base station and the terminal.

The exemplary embodiments of the present disclosure may be performed based on a TCI selection field and/or another field within the DCI. The exemplary embodiments of the present disclosure may be implemented through signaling other than the DCI (e.g., SI signaling, RRC signaling, MAC signaling). The exemplary embodiments of the present disclosure may be applied to communication using N TRPs and/or N panels. N may be a natural number equal to or greater than 2.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving downlink control information (DCI) from at least one TRP of a first transmission and reception point (TRP) or a second TRP, the DCI including scheduling information of a physical downlink shared channel (PDSCH), a transmission configuration indicator (TCI) field, and a TCI selection field;
determining at least one TCI state for reception of the PDSCH based on one or more TCI states indicated by the TCI field and a rule of a codepoint '11' of the TCI selection field; and
receiving the PDSCH from the at least one TRP of the first TRP or the second TRP based on the at least one TCI state,
wherein the TCI selection field is set to a codepoint '00', a codepoint '01', a codepoint '10', or the codepoint '11', and each of the codepoint '00', the codepoint '01', the codepoint '10', or the codepoint '11' indicates a different TCI state application rule.

2. The method of claim 1, wherein when the one or more TCI states indicated by the TCI field are {TCI state #n, none}, the UE receives a first PDSCH from the first TRP based on the TCI state #n, and the UE receives a second PDSCH from the second TRP based on a default TCI state determined by the rule of the codepoint '11', n being a natural number.

3. The method of claim 2, wherein the default TCI state is a TCI state used for reception of a previous PDSCH, a TCI state used for reception of a previous physical downlink control channel (PDCCH), a TCI state used for monitoring a control resource set (CORESET) having a lowest CORESET identifier (ID), or a TCI state in a TCI state list mapped to a lowest codepoint.

4. The method of claim 1, wherein the rule of the codepoint '11' is to change or maintain a TCI state for reception of the PDSCH in repeated PDSCH occasions.

5. The method of claim 4, wherein a default TCI state is applied in a first PDSCH occasion within a quasi-co-location (QCL) constraint time from a reception time of the DCI, and a TCI state applied in a second PDSCH occasion after the QCL constraint time is either maintained as the default TCI state or changed to another TCI state according to the rule of the codepoint '11'.

6. The method of claim 4, further comprising: transmitting, to the at least one TRP of the first TRP or the second TRP, UE capability information including information indicating whether the UE supports changing the TCI state for reception of the PDSCH in the repeated PDSCH occasions, and when the UE supports changing the TCI state in the repeated PDSCH occasions, the rule of the codepoint '11' is to change the TCI state for reception of the PDSCH in the repeated PDSCH occasions.

7. The method of claim 1, wherein the rule of the codepoint '11' is to ignore the one or more TCI states indicated by the TCI field.

8. The method of claim 7, wherein when indicated to ignore the one or more TCI states indicated by the TCI field, the at least one TCI state is a TCI state used for reception of a previous downlink (DL) channel, a TCI state used for reception of the DCI, a TCI state used for monitoring a CORESET associated with the DCI, or a TCI state used for reception of a random access (RA) message in an initial access procedure.

9. The method of claim 1, wherein the codepoint '11' of the TCI selection field indicates switching between multi-TRP (mTRP) communication and single-TRP (sTRP) communication, and after reception of the PDSCH, the mTRP communication is switched to the sTRP communication or the sTRP communication is switched to the mTRP communication based on the codepoint '11'.

10. The method of claim 1, wherein the codepoint '11' of the TCI selection field indicates a priority between a beam application time and a QCL constraint time, and when the beam application time has a higher priority, the one or more TCI states indicated by the TCI field are applied after the beam application time, and when the QCL constraint time has a higher priority, the one or more TCI states indicated by the TCI field are applied after the QCL constraint time.

11. A user equipment (UE) comprising at least one processor, wherein the at least one processor causes the UE to perform:
receiving downlink control information (DCI) from at least one TRP of a first transmission and reception point (TRP) or a second TRP, the DCI including scheduling information of a physical downlink shared channel (PDSCH), a transmission configuration indicator (TCI) field, and a TCI selection field;
determining at least one TCI state for reception of the PDSCH based on one or more TCI states indicated by the TCI field and a rule of a codepoint '11' of the TCI selection field; and
receiving the PDSCH from the at least one TRP of the first TRP or the second TRP based on the at least one TCI state,
wherein the TCI selection field is set to a codepoint '00', a codepoint '01', a codepoint '10', or the codepoint '11', and each of the codepoint '00', the codepoint '01', the codepoint '10', or the codepoint '11' indicates a different TCI state application rule.

12. The UE of claim 11, wherein when the one or more TCI states indicated by the TCI field are {TCI state #n, none}, the UE receives a first PDSCH from the first TRP based on the TCI state #n, and the UE receives a second PDSCH from the second TRP based on a default TCI state determined by the rule of the codepoint '11', n being a natural number.

13. The UE of claim 12, wherein the default TCI state is a TCI state used for reception of a previous PDSCH, a TCI state used for reception of a previous physical downlink control channel (PDCCH), a TCI state used for monitoring a control resource set (CORESET) having a lowest CORESET identifier (ID), or a TCI state in a TCI state list mapped to a lowest codepoint.

14. The UE of claim 11, wherein the rule of the codepoint '11' is to change or maintain a TCI state for reception of the PDSCH in repeated PDSCH occasions.

15. The UE of claim 14, wherein a default TCI state is applied in a first PDSCH occasion within a quasi-co-location (QCL) constraint time from a reception time of the DCI, and a TCI state applied in a second PDSCH occasion after the QCL constraint time is either maintained as the default TCI state or changed to another TCI state according to the rule of the codepoint '11'.

16. The UE of claim 14, wherein the at least one processor further causes the UE to perform: transmitting, to the at least one TRP of the first TRP or the second TRP, UE capability information including information indicating whether the UE supports changing the TCI state for reception of the PDSCH in the repeated PDSCH occasions, and when the UE supports changing the TCI state in the repeated PDSCH occasions, the rule of the codepoint '11' is to change the TCI state for reception of the PDSCH in the repeated PDSCH occasions.

17. The UE of claim 11, wherein the rule of the codepoint '11' is to ignore the one or more TCI states indicated by the TCI field.

18. The UE of claim 17, wherein when indicated to ignore the one or more TCI states indicated by the TCI field, the at least one TCI state is a TCI state used for reception of a previous downlink (DL) channel, a TCI state used for reception of the DCI, a TCI state used for monitoring a CORESET associated with the DCI, or a TCI state used for reception of a random access (RA) message in an initial access procedure.

19. The UE of claim 11, wherein the codepoint '11' of the TCI selection field indicates switching between multi-TRP (mTRP) communication and single-TRP (sTRP) communication, and after reception of the PDSCH, the mTRP communication is switched to the sTRP communication or the sTRP communication is switched to the mTRP communication based on the codepoint '11'.

20. The UE of claim 11, wherein the codepoint '11' of the TCI selection field indicates a priority between a beam application time and a QCL constraint time, and when the beam application time has a higher priority, the one or more TCI states indicated by the TCI field are applied after the beam application time, and when the QCL constraint time has a higher priority, the one or more TCI states indicated by the TCI field are applied after the QCL constraint time.
